# EUROPEAN PATENT SPECIFICATION

(11) **EP 1 409 166 B1**
(45) Date of publication and mention of the grant of the patent: **10.02.2010**
(21) Application number: 02747559.9
(22) Date of filing: 03.07.2002
(51) Int. Cl.: B09B 3/00, C08J 11/06, B29B 17/00

(54) **PROCESSING OF WASTE MATERIALS**
VERARBEITUNG VON ABFALLMATERIALIEN
TRAITEMENT DE DECHETS

(30) Priority: 03.07.2001 GB 0116318
(43) Date of publication of application: 21.04.2004
(73) Proprietor: Globally Greener Solutions Ltd, 35 Creswell Road Neath SA11 1HE (GB)
(72) Inventor: THOMAS, Peter, Ravenhill, Swansea SA5 4DL (GB)
(74) Representative: Austin, Hedley William
(86) International application number: PCT/GB2002/003063
(87) International publication number: WO 2003/004183

(56) References cited:
- WO-A-98/09785
- CH-A- 685 541
- GB-A- 2 294 926
- US-A- 3 723 338
- US-A- 4 585 583
- US-A- 5 434 338

## Description

The present invention relates to a method of processing a waste material.

A large variety of building elements or structural materials are known which comprise industrial or domestic waste bonded together by means of adhesive. Amongst such building elements or structural materials are breeze blocks (ashes and coal or coke bonded together with cement), chipboard (wood chips bonded together with an adhesive) and synthetic slates (slate dust bonded with adhesive).

In the thermoplastics processing industry, by-product material results from the production or processing of the thermoplastics materials. Providing an individual thermoplastic material can be kept free of contamination with other thermoplastics, it may be recycled for further processing and is therefore not waste material.

However, in view of the wide variety of thermoplastics currently used in industry, it is frequent for different types of thermoplastics waste to become mixed together; except for some special combinations there are generally significant problems in processing mixtures of different types of thermoplastics. For example, polyethylene has very different processing characteristics to those of polyethylene terephthalate (PET), both of which are common in food packaging. Furthermore, the processing characteristics of unplasticised PVC, ABS, polyethylene and PET, and other commonly used thermoplastic materials, are substantially different.

A method for improving the stiffness of such commingled plastics (mixed plastics waste) is disclosed in the Society of Plastic Engineering Annual Technical Conference 1995, Volume 53, Number 3, Pages 3752 to 3756. However, the process disclosed is a continuous process and requires the application of external heat in order to enable a moulded body to be produced. This gives rise to the disadvantage that the process cannot be carried out away from an industrial processing plant.

However, the materials produced by the methods identified above are not resistant to acids, alkalies, bleaches and organic solvents. They are therefore not suitable for use in environments where such resistance is required. In addition, such methods are not suitable for use with water, materials which are not plastics or which contain an amount of non-plastics material.

It is therefore an aim of the present invention to alleviate at least some of the disadvantages identified above.

It is a further aim of the present invention to provide a method of processing waste materials.

The method of the present invention provides a building element which is substantially resistant to attack by acids, alkalies, bleaches and/or organic solvents.

It is further known from, for example, US-A-4585583 that specialised waste material (namely spent ion exchange resin beads) can be bonded with an exothermically curable epoxy vinyl ester resin including a cross-linking monomer and a cross-linking initiator; this process involves fully encapsulating the beads.

It is further known, for example from CH-A-685541 that particulate specialist waste (namely slag from the metals industries) may be blended with curable polyester, vinyl ester or furan resins, to produce an environmentally disposable product. The specialist waste is one which has been subjected to extremes of temperature in the refining of the relevant metal.

It is further known, for example, from WO-A-98/09785 that finely divided waste material containing at least two thermoplastics can be blended with unsaturated polyester resins and the blend permitted to cure in a mould. There is no disclosure or suggestion that vinyl ester resins could be used in such a process.

Vinyl ester resins are however disclosed in US-A-3723338 for reducing the release of radioactive material from contaminated soil, in which the vinyl ester is injected into the contaminated soil. There is no suggestion of blending a waste material with a vinyl ester resin and applying the blend to a surface, an approach which would be entirely contrary to the aim of the process described in the cited US patent.

According to the present invention, there is provided a method of processing waste material with the combination of features of claim 1.

Preferred embodiments of the invention are set out in the dependent claims.

The term "waste material" as used herein denotes any material that would normally have no further economic use, or would be dumped, in for example, a landfill, if the material were not used in the method according to the present invention. The waste material is mixed containing at least one thermoplastic material.

The resulting element is not thermoplastic in nature; it has the characteristics of a cured thermoset material. The properties of the resulting element may be tailored depending on the nature of the waste material.

The waste material preferably includes at least one of the following: thermoplastics material, which may include ABS, polystyrene (for example high impact polystyrene), unplasticised PVC, one or more polyolefins (such as polyethylene or polypropylene), polyethylene terephthalate or other polyester, or a relatively low melting polyamide), glass, expanded polystyrene, building rubble, metals paper, cardboard, wood, ceramics of glass fibre.

It is envisaged that the waste material may be mixed (if the waste material is mixed, it is preferred that each waste material is processed separately) prior to blending with the resin.

The waste material may be pulverised to the particle size of less than about 5 mm. The size of particles may be selected, depending on the properties required.

The curing takes place where the body is to be used, on a surface, of a wall or a floor. The blend is preferably applied (by painting or the like) onto the surface prior to the curing.

The blending is typically carried out by a tumbling action, or by means of a high speed mixer. Advantageously, the high speed mixer comprises a blade, paddle or the like which may be shaped to retain air into the mix during the blending. The introduction of air is advantageous when it is desirable to manufacture a lightweight moulding. Such lightweight mouldings may be suitable as, for example, pallets or the like.

The amount of vinyl ester resin present in the blend does not exceed 20% by weight of the blend.

The vinyl ester is therefore present in a minor amount by weight of the resultant body, with the major part by weight being a matrix derived from the waste material, such that the matrix is bonded together by the cured vinyl ester.

The vinyl ester resin used in the method according to the invention is selected so as to be capable of undergoing exothermic cure, to generate a temperature of up to about 250°C during curing.

The vinyl ester resin formulation includes a cross-linking monomer such as styrene, together with a cross-linking initiator such as a peroxide.

A preferred vinyl ester resin is the resin sold under the trade mark DERAKANE by the Dow Chemical Company. In particular DERAKANE 411-350 which is a bisphenol-A epoxy resin is preferred.

Preferably the resin includes a catalyst. It is preferred that the catalyst includes an organic peroxide.

The epoxy vinyl ester resin has a corrosion-resistant structure and may be brominated so as to be substantially fire retardant.

Epoxy vinyl ester resins advantageously are resistant to attack by acids, alkalies, bleaches and organic solvents. They also give maximum resistance to caustic alkalies and hydrochloride bleaches and have good high temperature properties.

### EXAMPLE 1

85 parts of mixed plastics, wood, cardboard and hard-core were size reduced to an average particle size of 1mm in diameter. The waste was then mixed in a blender with 15 parts of epoxy vinyl ester resin and a catalyst. The resultant mix, which is resistant to hydrochloric, sulphuric and hydrofluoric acids, cold be applied on-site to surfaces where acid spills occur. The application is made in a similar manner to wall plaster.

## Claims

1. A method of processing waste material, which method comprises:
blending said waste material in particulate form with an exothermically curable epoxy vinyl ester resin including a cross-linking monomer and a cross-linking initiator, the vinyl ester resin being present in an amount not exceeding 20% by weight of the resultant blend, whereby the waste material is mixed domestic waste which has a particle size of less than 5 mm and which contains at least one thermoplastic material, and the resulting blend is applied to a wall or floor for example, by painting, and then allowed to cure on the wall or floor.

2. A method according to claim 1, wherein the blending is carried out by a tumbling action, or by means of a high speed mixer having a blade or paddle shaped to retain air into the mix during the blending.

3. A method according to claim 1 or 2, wherein said mixed domestic waste contains glass, expanded polystyrene, building rubble, metals, paper, cardboard, wood, ceramics or glass fibre.

## Patentansprüche

1. Verfahren zur Verarbeitung von Abfallmaterialien, wobei das Verfahren umfasst:
Mischen des Abfallmaterials in Partikelform mit einem exotherm härtbaren Epoxyvinylesterharz, enthaltend ein Vemetzungsmonomer und einen Vemetzungsinitiator, wobei das Vinylesterharz in einer Menge von nicht mehr als 20 Gew-% der resultierenden Mischung vorhanden ist, wobei das Abfallmaterial gemischten Haushaltsmüll darstellt, der eine Partikelgröße von weniger als 5 mm aufweist, und mindestens ein thermoplastisches Material enthält, und die resultierende Mischung wird dann auf eine Wand oder einen Boden aufgebracht, z.B. durch Streichen, und dann lässt man diese auf der Wand oder dem Boden aushärten.

2. Verfahren nach Anspruch 1, wobei das Mischen durch Taumelmischen durchgeführt wird oder durch einen Hochgeschwindigkeitsmischer mit einem klingen- oder flügel- bzw. schaufel(blatt)förmigen Scherblatt, um während des Mischens Luft in der Mischung einzubehalten.

3. Verfahren nach Anspruch 1 oder 2, wobei der gemischte Haushaltsabfall Glas, geschäumtes Polystyrol, Bauschutt, Metalle, Papier, Karton, Holz, Keramik oder Glasfaser enthält.

## Revendications

1. Procédé de traitement de déchets, le procédé comprenant :
l'opération de mélange desdits déchets sous forme particulaire avec une résine époxy vinyl ester exothermiquement durcissable comprenant un monomère de réticulation et un initiateur de réticulation, la résine vinyl ester étant présente en une quantité n'excédant pas 20 % en poids du mélange résultant, moyennant quoi les déchets sont mélangés avec des déchets domestiques qui présentent une taille de particule inférieure à 5 mm et qui contiennent au moins un matériau thermoplastique et on applique le mélange résultant à une paroi ou un sol, par exemple, par peinture, puis on le laisse durcir sur la paroi ou le sol.

2. Procédé selon la revendication 1, dans lequel le mélange est réalisé par une action de tonnelage ou au moyen d'un mélangeur à grande vitesse ayant une pale ou palette formée pour retenir l'air dans le mélange pendant l'opération de mélange.

3. Procédé selon la revendication 1 ou 2, dans lequel lesdits déchets domestiques mélangés contiennent du verre, du poly(styrène) expansé, des gravats de construction, des métaux, du papier, du carton, du bois, de la céramique ou de la fibre de verre.
